# EUROPEAN PATENT SPECIFICATION

(11) **EP 2 639 567 B1**
(45) Date of publication and mention of the grant of the patent: **28.04.2021**
(21) Application number: 13397505.2
(22) Date of filing: 13.03.2013
(51) Int. Cl.: G01N 1/22, G01N 1/24, G01N 1/38, G01N 23/22, G01N 23/223

(54) **Apparatus and method for collecting ash from flue gases**
Sammelvorrichtung für Asche aus Rauchgas
Dispositif et méthode de collecte de cendres des gaz de combustion

(30) Priority: 14.03.2012 FI 20125273
(43) Date of publication of application: 18.09.2013
(73) Proprietor: Valmet Technologies Oy, 02150 Espoo (FI)
(72) Inventor: Maunula, Joni, 33900 Tampere (FI); Toivonen, Tarmo, 13700 Parolannummi (FI)
(74) Representative: Berggren Oy

(56) References cited:
- EP-A2- 0 164 591
- WO-A1-2005/103643
- DE-A1- 4 241 891
- JP-A- 2003 254 888

## Description

### Field of the invention

The invention relates to an apparatus for collecting ash from flue gases. The invention also relates to a method for collecting ash from flue gases.

### Background of the invention

In view of optimizing the operation of boilers and the combustion process in them, or the selection of the fuel, it is important to know the combustion process. One way of examining the combustion process is to analyze the ash from the combustion, and the other particles contained in the ash.

During the operation of boilers, ash is collected, for example, from flue gases carrying ash and other particles entrained in them. The ash and other particles are separated from the flue gases and taken to analysis. The analysis can be conducted in a variety of ways.

One example of collecting ash from flue gases, conducting an analysis, and controlling the boiler on the basis of the analysis conducted is presented in document EP 1914475 A2. Another example of an apparatus comprising, among other things, a probe, a collector and the necessary channel system, as well as a source of additional gas, is presented in document US 6,016,688 A.

DE 4241891 A1 and WO2005/103643 A1 disclose other prior art gas samplers.

### Brief summary of the invention

The apparatus according to the invention is presented in more detail in claim 1. The method according to the invention is presented in more detail in claim 13. The other claims present some other embodiments of the invention.

The presented solution is used for collecting ash in such a way that it can be analyzed or a sample can be taken from it for analysis.

As a solution both an apparatus and a method for collecting ash from flue gases are provided. In an example, said apparatus comprises at least a probe suitable for collecting flue gas that contains ash and other particles. The apparatus further comprises a filter that is configured to filter the flue gas flowing through the filter and to separate ash and other particles from the flue gas. Furthermore, the apparatus comprises a suction device which produces a flue gas flow through the apparatus and is configured to suck flue gas through said filter.

Said embodiment makes it possible to collect dry ash. The collecting is performed for e.g. a separate analysis, or the analysis can be conducted by means of a spectrometer directly from the ash in the filter. For example, an XRF (X-Ray Fluorescence Analysis) device is connected to the apparatus. In other embodiments, ash can also be mixed in a liquid, from which a sample is taken.

In an embodiment, the suction device is an ejector pump or an injector. Preferably, it is an ejector pump or an injector which is driven by means of compressed air or another gas flow and which sucks flue gas and feeds it forward, for example into a channel. In an example, compressed air is used, which is supplied from a compressed air network and controlled by means of shut-off valves.

The apparatus comprises in addition a pressure device. Said pressure device is configured to blow gas through the filter to remove ash and other particles therefrom, which have been carried to the filter by the flue gas flow. The removed ash is collected for analysis. In an example, compressed air is used, which is supplied from a compressed air network and controlled by means of shut-off valves.

Said embodiment makes it possible to collect ash easily, because it is not necessary to remove the filter, nor is it necessary to take a sample from it manually. The direction of the gas blow is opposite to the direction in which the flue gas flows through the filter. Sampling is accelerated, and simultaneously the service life of the filter is extended.

The gas used may be, for example, air or compressed air, or another suitable gaseous substance.

In an embodiment, the ash is conveyed to a dissolving vessel, in which the ash and other particles are mixed in a liquid. From the ash and other particles, substances are dissolved in the liquid, which can be analyzed. The liquid is, for example, water or another suitable liquid substance that has suitable dissolving properties and is suitable for use in the analysis.

Some embodiments of the presented solution make continuous sampling possible, even on-line sampling. This enables accelerated analysis and, in this way, the boiler can also be controlled faster than before. The apparatus may also be coupled with analysis equipment or measurement equipment for conducting the analysis at short intervals or even continuously. The advantage is that the control of the burner may respond to changes in the combustion process faster than before.

According to an example of the solution, the filter is reversible or rotatable to different positions. Thus, for example in one position the filter collects ash, and in another position the ash is blown off the filter, the blow taking place through the filter. The ash blow may take place alternatively either back to the channel or collecting chamber from which the flue gas entered the filter, or into another channel or collecting chamber, into which the ash is blown for sampling. It may also be a channel through which the flue gases exit the filter, or a channel intended merely for collected ash.

In an example, the filter is reversible, having two sides. Therefore, a simple structure is possible. After the filtering, the filter is reversed and the ash is blown to the same channel or collecting chamber, into which the flue gas exited the filter, after the flue gas had passed through the filter during the filtration. In an example, the ash is blown through said channel or collecting chamber to a dissolving vessel. According to another example, the apparatus comprises in addition analysis equipment or measuring equipment for analysing the ash in the filter.

Both surfaces of the double-sided filter are used in an alternating manner, or only one surface is used, for collecting ash. If the filter comprises two or more sides, surfaces or separate areas, these can be used in an alternating manner for collecting ash. The structure of the filter may be, for example, a hollow cylinder or a square. A structure comprising two or more sides, surfaces or separate areas makes it possible to filter and blow simultaneously. Thus, the apparatus comprises a channel from which the flue gas enters the filter, another channel from which the flue gas exits the filter, and a third channel (or collecting chamber), into which the ash is blown off the filter (the blow taking place through the filter). Thus, each side, surface or separate area is reversed, on one hand, to a position in which it collects ash and, on the other hand, to a position in which ash is removed from it by blowing.

According to an example of this solution, the filter is not reversible or rotatable to different positions. Thus, ash is blown off the filter and back to the collecting chamber or channel, from which the flue gas entered the filter.

According to an example in this solution , the apparatus is configured in connection with the flue gas duct. The apparatus, particularly the probe thereof, is placed in a location where the flue gases are to be analyzed and where their temperature is suitable, for example because the reactions of the substances in the flue gases have already been completed. When the apparatus is placed in connection with the flue gas duct, the flue gas circulating in the apparatus can be returned to the flue gas duct, and simultaneously the liquid, in which the ash has been mixed for sampling, can be supplied to the flue gas duct. As a result, the structure becomes simpler, particularly with respect to the connections and channels or pipe systems needed.

The flue gas duct is, for example, a channel in a burner based on combustion on a grate or in a burner based on fluidized bed technique, in which channel the flue gas flows. Sampling by the presented apparatus takes place, for example, in a location where the flue gases have not yet entered the apparatuses for filtering or cleaning the flue gas.

The method according to this approach applies said apparatus and the above presented operation.

### Description of the drawings

The different embodiments of the invention will now be discussed in more detail with reference to the appended drawings.
Figure 1 shows an apparatus for collecting ash, equipped with a filter, in a cross-sectional side view for illustrating the different functions.
Figure 2 shows an apparatus for collecting ash, equipped with a filter, a blow and a dissolving vessel, in a cross-sectional side view for illustrating the different functions.
Figure 3 shows an apparatus for collecting ash, equipped with a reversible filter, a blow and a dissolving vessel, in a cross-sectional side view for illustrating the different functions.
Figure 4 shows an apparatus for collecting ash, equipped with a reversible filter, a measuring device and a blow, in a cross-sectional side view for illustrating the different functions.

### Detailed description of the invention

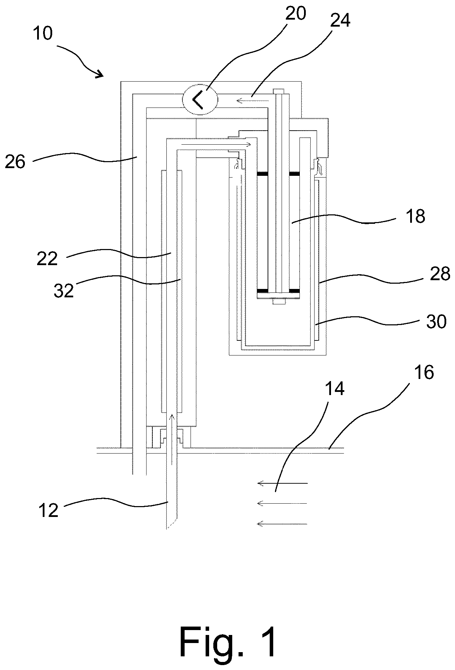

Figures 1 to 4 show some embodiments of the presented solution. In the figures, the same reference numerals denote to parts which are similar or whose operation is based on the same principles.

Figure 1 shows an embodiment of a solution which is an apparatus 10 for collecting ash from flue gases.

The apparatus 10 can be used for collecting ash which is taken for analysis. If necessary, the filter in the apparatus can also be taken for analysis. The ash to be collected is dry. In an embodiment, the apparatus can also be used for mixing ash in a liquid, and a sample is taken from the liquid for analysis.

The apparatus 10 comprises a probe 12 which, in a use situation, is placed in the flue gas flow 14 for sampling and is configured to collect flue gas containing ash and other particles. The flow 14 is in a flue gas duct 16. The flue gas passes through a filter 18, and the filter separates ash and other particles from the flue gas. The apparatus comprises in addition a suction device 20 generating a suction or an underpressure. Flue gas is conveyed along a channel 22 from the probe 12 to the filter 18. Flue gas is conveyed along a channel 24 from the filter 18 to the suction device 20.

In an example, the apparatus 10 comprises in addition a channel 26, along which flue gas is guided away from the suction device 20. Preferably, the flue gas is guided along the channel 26 back to the flue gas flow 14 and into the flue gas duct 16.

The apparatus 10 is normally configured in connection with the flue gas duct 16. The flue gas flows inside the flue gas duct 16. The apparatus 10 is primarily placed outside the flue gas duct 16, but the probe 12 is inside the same. The channel 22 is connected by the probe 12 to the inside of the flue gas duct 16. The channel 26 is connected to the inside of the flue gas duct 16.

According to an example not part of the claimed invention shown in Fig. 1, the apparatus 10 further comprises a collecting chamber 28, inside which the filter 18 is placed. The channel 22 and the channel 24 are in connection with the collecting chamber 18, or they are coupled to the collecting chamber 18.

The apparatus 10 of Fig. 1 as well as corresponding apparatuses according to some other examples operate in the following way.

The suction device 20 generates an underpressure which effects on the flue gas through the filter 18, via the channel 22 and by means of the probe 12. The flue gas, with the ash and other particles entrained in it, is sucked into the apparatus 10, and the filter 18 separates the ash and other particles from the flue gas. The flue gas flows through the filter 18 to the suction device 20 and further out of the suction device 20. In an example, the flue gas is returned into the flue gas duct 16. In Fig. 1, the channel 26 guides the flue gas back into the flue gas duct 16.

Ash and other particles accumulate in the filter 18. The filter is, for example, a hollow cylinder which is connected to the apparatus 10, for example inside the collecting chamber 28. The filter is preferably replaceable.

It is also possible that part of the ash does not reach the filter 18 but drops into the collecting chamber 28 where the filter 18 is, or into a channel. Ash detached from the filter also drops into said collecting chamber 28 or channel. In an example, ash dropped into the collecting chamber is also used for sampling.

In an example, the collecting chamber 28 comprises a part which is removable from the apparatus 10 and which also constitutes a collecting receptacle into which the ash drops. By means of the collecting receptacle, the ash can be transferred to analysis.

The collecting chamber 28 comprises a heating element 30. The channel 22 comprises a heating element 32 as well. The heating elements are used, if one wants to avoid the condensation of moisture contained in the hot flue gases.

If necessary, the apparatus 10 comprises closing members for opening or closing connections or channels. A closing member may be placed between the filter 18 and the probe 12, for example in the channel 22, or between the collecting chamber 28 and the probe 12. A closing member may also be placed in a connection or channel between the suction device 20 and the flue gas duct 16, for example in the channel 26.

The closing member is, for example, an electrically or pneumatically controlled valve which is openable and closeable.

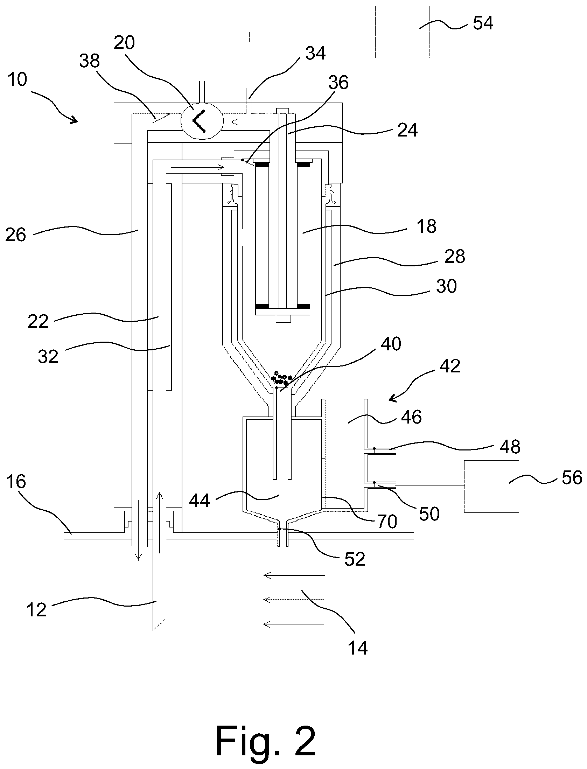

Figure 2 shows an embodiment of the solution.

The apparatus 10 is mainly similar to that shown in Fig. 1, but it also comprises a pressure device 54. The pressure device 54 is placed in such a way that it can be used for blowing gas into the apparatus 10 and through the filter 18, for example via the channel 24. In another example, the apparatus 10 can comprise a connection 34, to which the pressure device, such as a source of compressed air is coupleable. In an example, a compressed air system is used. The connection 34 is placed in such a way that compressed gas flows through the filter 18. In the apparatus of Fig. 2, the pressure device 54 or the connection 34 is coupled to the channel 24.

Compressed gas flows through the filter 18 in a direction opposite to the direction of the flue gas flow through said filter 18. In the apparatus of Fig. 2, the pressure device 54 or the connection 34 is coupled to the channel 24 so that it is placed downstream of the filter 18 in view of the direction of flow of the flue gas during the collecting of ash.

By means of compressed gas, ash and other particles can be removed from the filter 18. The ash accumulates in a collecting chamber 28 or a channel from which it is collected for sampling. In an example, the collecting chamber 28 is used as a movable collecting receptacle.

The apparatus 10 of Fig. 2 comprises a collecting chamber 28 in which both ash settled from the flue gas and ash removed from the filter 18 by blowing are accumulated.

If necessary, the apparatus 10 comprises closing members for opening or closing connections or channels. In the example of Fig. 2, the closing member 36 is between the collecting chamber 28 and the probe 12, and furthermore, the closing member 38 is placed downstream of the pressure device 54 or the connection 34, in view of the direction of flow of the flue gas during the collecting of ash.

Figure 2 shows an example of the apparatus 10 that comprises a dissolving vessel 42. The dissolving vessel 42 intensifies the use of the apparatus and even makes on-line measurement possible. Ash and other particles removed from the filter 18 by blowing are conveyable to the dissolving vessel 42 where they are mixed in a liquid. The ash is transferred into the dissolving vessel 42 either from the collecting chamber 28 or the channel in which the ash has accumulated, or directly from the filter 18.

Preferably, the apparatus 10 comprises a closing member for either allowing or preventing the entry of ash into the dissolving vessel 42, for example a closing member 40. In the apparatus of Fig. 2, the blow through the filter 18 is not necessary, wherein there is no connection 34 or pressure device 54. Thus, ash is simply passed at intervals into the dissolving vessel 42, for example by means of the closing member 40.

If necessary, the dissolving vessel 42 comprises a connection 48, through which liquid can be guided into the dissolving vessel 42, or the apparatus 10 comprises devices for supplying liquid into the dissolving vessel 42. If necessary, the dissolving vessel 42 comprises a connection 50, through which liquid can be taken from the dissolving vessel 42 for analysis, or the apparatus 10 comprises devices for taking a sample from the dissolving vessel 42. The dissolving vessel 42 may comprise one chamber, but in the example of Fig. 2 it comprises at least two chambers 44 and 46.

The apparatus 10 of Fig. 2 as well as corresponding apparatuses according to some other examples operate in the following way.

By means of compressed gas, ash and other particles are transferred into the dissolving vessel 42. Thus, it can be provided that suitable closing members are closed or opened, wherein the gas is guided through the filter 18 and the ash is transferred to the dissolving vessel 42. For example, the closing member 40 is open, the closing member 36 is closed, and the closing member 38 is closed. Liquid is supplied into the dissolving vessel 42, in which the ash and other particles are mixed. Substances from the ash are dissolved in the liquid, which substances can be analyzed by taking a sample of the liquid or by guiding some liquid into a measuring device 56 connected to the apparatus 10.

In the embodiment of Fig. 2, the dissolving vessel 42 comprises a compartment 44, into which the ash and other particles are conveyed to be mixed in the liquid, as well as a compartment 46, into which the liquid for sampling is conveyable from the compartment 44. Furthermore, the dissolving vessel 42 comprises a filter 70, through which the liquid is conveyable from one compartment to another. The function of the filter 70 is to allow the entry of the liquid and the substances dissolved in it through the filter 70 to the chamber, e.g. chamber 46, from which the sample is taken. The filter 70 prevents the entry of pieces which are insoluble in the liquid into the chamber, from which the sample is taken.

In the embodiment of Fig. 2, the connection for the liquid 48 is in connection with the compartment 46, and the connection 50 for sampling is also in connection with the same compartment 46.

Preferably, the dissolving vessel 42 also comprises at least one outlet 52, through which the mixture of liquid and ash can be removed from the dissolving vessel 42. In Fig. 2, the apparatus 10 is configured in connection with the flue gas duct 16, wherein the outlet 52 is connected with the flue gas duct 16, into which the mixture of liquid and ash is removed. Preferably, the outlet 52 is provided with a closing member for controlling the flow of the liquid out of the dissolving vessel 42.

The liquid is removed from the dissolving vessel 42 by e.g. blowing, when the outlet 52 is open, or merely by opening the closing member of the outlet 52. At the same time, other suitable closing members may also be open or closed to convey the compressed gas into the dissolving vessel for the blowing.

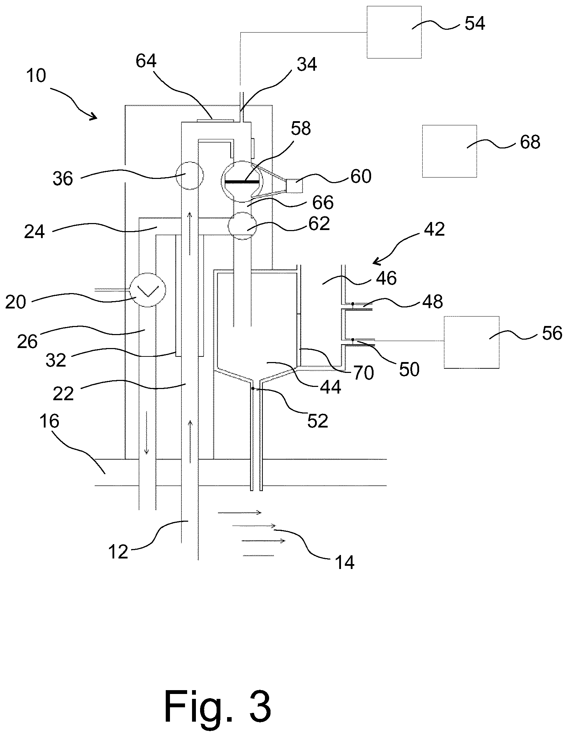

Figure 3 shows an embodiment of the arrangement, comprising a filter 58, through which the flue gas passes and which separates ash and other particles from the flue gas. In the example of Fig. 3, as well as in other corresponding examples, the filter can also be reversed or rotated to at least two different positions. In one position, the filter collects ash and other particles, and in the other position, the ash and other particles collected are removed from the filter by blowing.

In the example of Fig. 3, the filter 58 is reversible around. The apparatus comprises, for example, an electrically or pneumatically controlled device for reversing the filter.

The filter 58 is double-sided, comprising parallel opposite sides, through which the flue gas flows. The filter 58 has two positions, in which said sides change places.

In an example, the filter 58 functions in such a way that one of said sides collects ash, after which the filter is reversed around and ash is removed from the filter by blowing. Preferably, the collecting side faces up and the opposite side down. Thus, the blowing direction is also the same as the direction of the flue gas flow during collecting. In the apparatus of Fig. 3, the pressure device 54 or the connection 34 is coupled to the channel 22, so that it is placed upstream of the filter 58 in view of the direction of flow of the flue gas during the collecting of ash.

After the above-mentioned removal of ash, the filter 58 is reversed again, and the collecting of ash is restarted. In another example, opposite sides of the filter are used in an alternating manner for collecting ash. Thus, the filter is not reversed again right after the cleaning.

Figure 3 shows an example of the apparatus 10 that also comprises a dissolving vessel 42. From the filter 58, the ash is blown into the dissolving vessel 42 whose function corresponds to what has been described above. The embodiment of Fig. 3 does not comprise a separate collecting chamber, but one can be provided in connection with the filter 58. A channel 66 connects the dissolving vessel 42 with the filter 58 or the collecting chamber or the channel where the ash accumulates or drops. In the example of Fig. 3, the channel 66 also connects the filter 58 with the channel 24 to which the flue gases are removed from the filter 58. If necessary, the channels are provided with one or more heating elements 32 and 64.

If necessary, the apparatus 10 of Fig. 3 also comprises other closing members for opening or closing connections or channels. In the example of Fig. 3, a closing member 36 is provided between the filter 85 and the probe 12, for example in the channel 22, and further a closing member 62 is placed between the suction device 20 and the filter 58. The closing member 62 can also be placed upstream of the suction device 20, in view of the direction of the flue gas flow during the collecting of ash. The function of the closing member 62 corresponds to the function of the closing member 38 of Fig. 2. In the example of Fig. 3, the closing member 62 is provided with a function in which it simultaneously both closes the channel 24 and opens the channel 66, and *vice versa.* Other closing members can be provided with corresponding functions as well.

The apparatus of Fig. 3 functions in the following way. When the suction device 20 is in operation, flue gas is sucked from the flue gas duct 16 and conveyed to the filter 58. The suction is effective through the filter 58. The filtered flue gas is conveyed from the filter 58, for example back to the flue gas duct. After the collecting of the ash has been completed, the filter 58 is reversed, and ash is detached from the filter 58 by means of the pressure device 54 or by blowing compressed gas. In the example of Fig. 3, ash is also conveyed to a dissolving vessel 42 whose operation corresponds to that presented already in connection with Fig. 2.

In an example, the apparatus 10 comprises one or more pressure sensors for measuring the pressure of the flue gas. The sensor is placed in a suitable location, for example in a channel, a collecting chamber, or by the filter. In Fig. 3, the apparatus 10 comprises a sensor 60 for measuring or determining the pressure difference effective across the filter 58. On the basis of said pressure difference, it is possible to estimate how much ash has been accumulated in the filter and whether it is time to stop collecting and to reverse the filter for blowing.

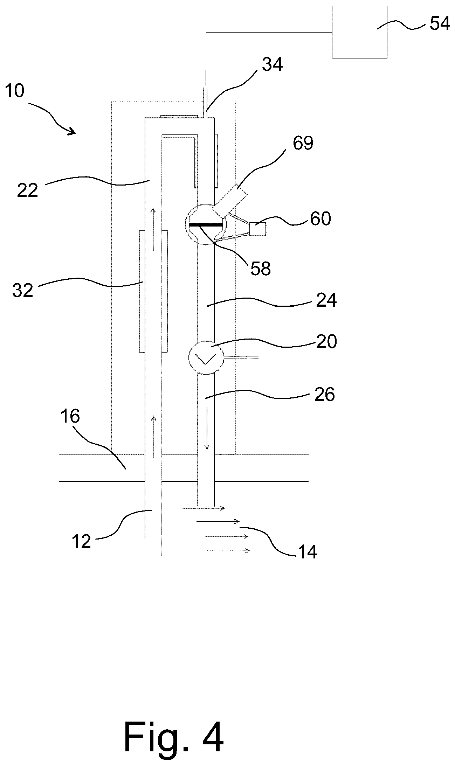

Figure 4 shows an example of an apparatus 10 which part of the claimed invention and which has no dissolving vessel and whose operation corresponds mainly to the operation of the apparatus of Fig. 3. From the reversible filter 58, the ash is blown to a channel 24 into which the flue gases are also removed from the filter 58. The apparatus of Fig. 4 is compact, and the filter 58 can be provided with measurement or analysis equipment 69, such as a spectrometer. The spectrometer analyses dry ash in the filter. After reversing and cleaning the filter, fresh ash is collected which can be analyzed. A sensor 60 can be used for measuring or determining the pressure difference effective across the filter 58.

The apparatus of Fig. 4 operates in the following way. When the suction device 20 is in operation, flue gas is sucked from the flue gas duct 16 and conveyed to the filter 58. The suction is effective through the filter 58. The filtered flue gas is removed from the filter 58, for example back to the flue gas duct, by using the channel 26. After the collecting and analyzing of the ash has been completed, the filter 58 is reversed, and the filter 58 is cleaned from ash by blowing compressed gas.

The apparatus 10 is controlled and its functions are coordinated by means of, for example, a control unit 68. The control unit can also be another control system for controlling the process in which the presented apparatus 10 is placed, for example a burner process. The control unit is connected to pressure sensors and closing members, and a device for reversing the filter 58. The control unit can also control the operation of the suction device 20, the pressure device 54 and the measurement equipment 56, as well as other measurement or analysis equipment, or control their operation in such a way that the above-described different modes of operation are possible.

The invention is not limited solely to the examples or embodiments mentioned in the above description. The examples, apparatuses and functions presented in Figs. 1 to 4 and in the description can be combined to provide desired functions in such a way that ash can be collected for sampling. For example, the apparatus of Fig. 1 can be provided with blowing presented in connection with Figs. 2 to 4. Furthermore, the structure of the reversible or rotatable filter may vary in the above described way, and the placement of the channels as well as the suction device or the pressure device is configured in such a way that the flue gases and the collected ash are conveyed to a desired location, particularly to a dissolving vessel or a collecting receptacle.

Different embodiments of the invention are defined in more detail in the appended claims.

## Claims

1. An apparatus for collecting ash from flue gases, the apparatus (10) comprising at least:
- a probe (12) for collecting flue gas containing ash and other particles,
- a filter (18, 58) configured to filter the flue gas flowing through the filter and to separate ash and other particles from the flue gas,
- a first channel (22) configured to convey flue gas from the probe (12) to the filter (18, 58),
- a suction device (20) configured to suck flue gas through said filter (18, 58);
- a second channel (24) configured to convey flue gas from the filter to the suction device;
- a collecting chamber (28) in which the filter (18, 58) is placed; the first and second channel (22, 24) being connected to the collecting chamber (28), and the collecting chamber (28) and the first channel (22) comprising a heating element (30, 32);
- a pressure device (54) configured to blow compressed gas into the apparatus (10) and through the filter (18, 58) such that ash and other particles can be removed from the filter (18, 58) and can accumulate in the collecting chamber (28);
- a dissolving vessel (42), to which said ash and other particles brought by the flue gas flow to the filter and detached from the filter (18, 58) by means of said gas blow are conveyable for sampling.

2. The apparatus according to claim 1, wherein the pressure device (54) is connected to the second channel (24).

3. The apparatus according to claim 1, wherein the pressure device (54) is connected to the first channel (22) and wherein said filter (18, 58) is reversible or rotatable to at least two different positions in such a way that in one position the filter collects ash and other particles, and in the other position collected ash and other particles are removed from the filter by means of said gas blow.

4. The apparatus according to claim 3, wherein said filter (18, 58) comprises two opposite sides, and the filter is reversible around.

5. The apparatus according to claim 3 or 4, wherein the apparatus comprises measurement or analysis equipment (69) placed at said filter and configured to analyze ash accumulated in said filter (58).

6. The apparatus according to any of the claims 3 to 5, wherein the apparatus comprises a sensor (60) for measuring or determining the pressure difference effective across said filter.

7. The apparatus according to any of the claims 1 to 6, wherein the dissolving vessel (42) comprises at least:
- a first compartment (44), into which the ash and other particles are conveyed for mixing in a liquid;
- a second compartment (46), into which the liquid is conveyable from the first compartment, for sampling; and
- a filter (70), through which the liquid is conveyable from the first compartment (44) to the second compartment (46).

8. The apparatus according to any of the claims 1 to 7, wherein the dissolving vessel (42) comprises:
- a first connection (48) for conveying liquid to the dissolving vessel; and
- a second connection (50) for taking a sample of the liquid.

9. The apparatus according to any of the claims 1 to 8, wherein the dissolving vessel (42) further comprises an outlet (52), through which the liquid and the ash and other particles dissolved in it are removable from the dissolving vessel (42).

10. The apparatus according to claim 9, wherein the apparatus (10) is configured in connection with the flue gas duct (16) in such a way that the outlet (52) is in connection with said flue gas duct (16).

11. The apparatus according to any of the claims 1 to 10, wherein the apparatus (10) is configured in connection with the flue gas duct (16) in such a way that the probe (12) is inside the flue gas duct (16) for collecting flue gas, wherein the apparatus (10) further comprises a third channel (26) configured to convey flue gas away from the suction device (20) back to the flue gas duct (16).

12. The apparatus according to any of the claims 1 to 11, wherein the apparatus (10) comprises at least closing members (36, 62) configured to both close the connection between the probe and the filter and to allow the flow of blown air through the filter (18, 58) into the dissolving vessel (42).

13. A method for collecting ash from flue gases, the method comprising at least:
- collecting flue gas that contains ash and other particles by means of a probe (12);
- separating ash and other particles from the flue gas by using a filter (18, 58) configured to filter the flue gas flowing through the filter;
- conveying flue gas from the probe (12) to the filter (18, 58);
- sucking flue gas through said filter (18, 58) by means of a suction device (20); and
- conveying flue gas from the filter to the suction device; and
- conveying compressed gas to the filter (18, 58), by blowing through the filter (18, 58);
**characterized in that** the method further comprises:
- conveying the ash and other particles removed by blowing said gas from the filter (18, 58) to a dissolving vessel (42) in which the ash and other particles brought by the flue gas flow to the filter are mixed in a liquid for sampling, and
- heating the flue gas.

14. The method according to claim 13, wherein the method further comprises:
- reversing or rotating said filter (18, 58) to at least two different positions so that in one position the filter collects ash and other particles, and in the other position collected ash and other particles are removed from the filter by using said gas blow.

## Patentansprüche

1. Vorrichtung zum Sammeln von Asche aus Rauchgasen, wobei die Vorrichtung (10) zumindest Folgendes umfasst:
- eine Sonde (12) zum Sammeln von Rauchgas, das Asche und andere Partikel enthält,
- einen Filter (18, 58), der dafür konfiguriert ist, das durch ihn strömende Rauchgas zu filtern und Asche und andere Partikel aus dem Rauchgas abzuscheiden,
- einen ersten Kanal (22), der dafür konfiguriert ist, Rauchgas von der Sonde (12) zum Filter (18, 58) zu leiten,
- ein Sauggerät (20), das dafür konfiguriert ist, Rauchgas durch den Filter (18, 58) zu saugen;
- einen zweiten Kanal (24), der dafür konfiguriert ist, Rauchgas vom Filter zum Sauggerät zu leiten;
- eine Sammelkammer (28), in welcher der Filter (18, 58) angeordnet ist; wobei der erste und zweite Kanal (22, 24) mit der Sammelkammer (28) verbunden sind und die Sammelkammer (28) und der erste Kanal (22) ein Heizelement (30, 32) umfassen;
- ein Druckgerät (54), das dafür konfiguriert ist, Druckgas derart in die Vorrichtung (10) und durch den Filter (18, 58) zu blasen, dass Asche und andere Partikel aus dem Filter (18, 58) entfernt werden können und sich in der Sammelkammer (28) ansammeln können;
- einen Auflösungsbehälter (42), zu welchem die Asche und andere Partikel, die durch den Rauchgasstrom zum Filter mitgeführt und mittels des Gasblasstroms vom Filter abgelöst werden, für eine Probenahme leitbar sind.

2. Vorrichtung nach Anspruch 1, wobei das Druckgerät (54) mit dem zweiten Kanal (24) verbunden ist.

3. Vorrichtung nach Anspruch 1, wobei das Druckgerät (54) mit dem ersten Kanal (22) verbunden ist und wobei der Filter (18, 58) derart in mindestens zwei verschiedene Positionen umkehrbar oder drehbar ist, dass er in einer Position Asche und andere Partikel sammelt und in der anderen Position gesammelte Asche und gesammelte andere Partikel mittels des Glasblasstroms aus dem Filter entfernt werden.

4. Vorrichtung nach Anspruch 3, wobei der Filter (18, 58) zwei einander gegenüberliegende Seiten umfasst und umdrehbar ist.

5. Vorrichtung nach Anspruch 3 oder 4, wobei die Vorrichtung eine Mess- oder Analyseeinrichtung (69) umfasst, die an dem Filter angeordnet ist und dafür konfiguriert ist, in dem Filter (58) angesammelte Asche zu analysieren.

6. Vorrichtung nach irgendeinem der Ansprüche 3 bis 5, wobei die Vorrichtung einen Sensor (60) zum Messen oder Ermitteln der im gesamten Filter wirksamen Druckdifferenz umfasst.

7. Vorrichtung nach irgendeinem der Ansprüche 1 bis 6, wobei der Auflösungsbehälter (42) zumindest Folgendes umfasst:
- eine erste Teilkammer (44), in welche die Asche und andere Partikel zum Mischen in einer Flüssigkeit geleitet werden;
- eine zweite Teilkammer (46), in welche die Flüssigkeit von der ersten Teilkammer für eine Probenahme leitbar ist; und
- einen Filter (70), durch welchen die Flüssigkeit von der ersten Teilkammer (44) zur zweiten Teilkammer (46) leitbar ist.

8. Vorrichtung nach irgendeinem der Ansprüche 1 bis 7, wobei der Auflösungsbehälter (42) Folgendes umfasst:
- eine erste Verbindung (48) zum Leiten von Flüssigkeit zum Auflösungsbehälter; und
- eine zweite Verbindung (50) zur Aufnahme einer Probe der Flüssigkeit.

9. Vorrichtung nach irgendeinem der Ansprüche 1 bis 8, wobei der Auflösungsbehälter (42) ferner einen Auslass (52) umfasst, durch welchen die Flüssigkeit und die in ihr gelöste Asche und andere in ihr gelöste Partikel aus dem Auflösungsbehälter (42) entfernbar sind.

10. Vorrichtung nach Anspruch 9, wobei die Vorrichtung (10) derart in Verbindung mit der Rauchgasleitung (16) konfiguriert ist, dass der Auslass (52) mit der Rauchgasleitung (16) in Verbindung ist.

11. Vorrichtung nach irgendeinem der Ansprüche 1 bis 10, wobei die Vorrichtung (10) derart in Verbindung mit der Rauchgasleitung (16) konfiguriert ist, dass die Sonde (12) sich innerhalb der Rauchgasleitung (16) zum Sammeln von Rauchgas befindet, wobei die Vorrichtung (10) ferner einen dritten Kanal (26) umfasst, der dafür konfiguriert ist, Rauchgas fort vom Sauggerät (20) zurück zur Rauchgasleitung (16) zu leiten.

12. Vorrichtung nach irgendeinem der Ansprüche 1 bis 11, wobei die Vorrichtung (10) zumindest Schließelemente (36, 62) umfasst, die dafür konfiguriert sind, die Verbindung zwischen der Sonde und dem Filter zu schließen und den Blasluftstrom durch den Filter (18, 58) in den Auflösungsbehälter (42) zu ermöglichen.

13. Verfahren zum Sammeln von Asche aus Rauchgasen, wobei das Verfahren zumindest Folgendes umfasst:
- Sammeln von Rauchgas, das Asche und andere Partikel enthält, mittels einer Sonde (12);
- Abscheiden von Asche und anderen Partikeln aus dem Rauchgas unter Verwendung eines Filters (18, 58), der dafür konfiguriert ist, das durch ihn strömende Rauchgas zu filtern;
- Leiten von Rauchgas von der Sonde (12) zum Filter (18, 58);
- Saugen von Rauchgas durch den Filter (18, 58) mittels eines Sauggeräts (20); und
- Leiten von Rauchgas vom Filter zum Sauggerät; und
- Leiten von Druckgas zum Filter (18, 58) durch Blasen durch den Filter (18, 58);
**dadurch gekennzeichnet, dass** das Verfahren ferner Folgendes umfasst:
- Leiten der Asche und anderer Partikel, die durch Blasen des Gases entfernt werden, vom Filter (18, 58) zu einem Auflösungsbehälter (42), in welchem die Asche und andere Partikel, die durch den Rauchgasstrom zum Filter mitgeführt werden, für eine Probenahme in einer Flüssigkeit gemischt werden, und
- Erwärmen des Rauchgases.

14. Verfahren nach Anspruch 13, wobei das Verfahren ferner Folgendes umfasst:
- Umkehren oder Drehen des Filters (18, 58) in mindestens zwei verschiedene Positionen derart, dass der Filter in einer Position Asche und andere Partikel sammelt und in der anderen Position gesammelte Asche und gesammelte andere Partikel unter Verwendung des Glasblasstroms aus dem Filter entfernt werden.

## Revendications

1. Appareil permettant de collecter des cendres provenant de gaz de combustion, l'appareil (10) comprenant au moins :
- une sonde (12) permettant de collecter un gaz de combustion contenant des cendres et d'autres particules,
- un filtre (18, 58) configuré pour filtrer le gaz de combustion circulant à travers le filtre et pour séparer des cendres et d'autres particules du gaz de combustion,
- un premier canal (22) configuré pour convoyer un gaz de combustion de la sonde (12) au filtre (18, 58),
- un dispositif d'aspiration (20) configuré pour aspirer un gaz de combustion à travers ledit filtre (18, 58) ;
- un deuxième canal (24) configuré pour convoyer un gaz de combustion du filtre au dispositif d'aspiration ;
- une chambre de collecte (28) dans laquelle le filtre (18, 58) est placé ; le premier et le deuxième canal (22, 24) étant raccordés à la chambre de collecte (28), et la chambre de collecte (28) et le premier canal (22) comprenant un élément chauffant (30, 32) ;
- un dispositif de pression (54) configuré pour souffler du gaz comprimé dans l'appareil (10) et à travers le filtre (18, 58) de telle sorte que des cendres et d'autres particules peuvent être enlevées du filtre (18, 58) et peuvent s'accumuler dans la chambre de collecte (28) ;
- un récipient de dissolution (42), auquel lesdites cendres et autres particules amenées par le flux de gaz de combustion au filtre et détachées du filtre (18, 58) au moyen dudit souffle de gaz peuvent être convoyées en vue d'un échantillonnage.

2. Appareil selon la revendication 1, dans lequel le dispositif de pression (54) est raccordé au deuxième canal (24).

3. Appareil selon la revendication 1, dans lequel le dispositif de pression (54) est raccordé au premier canal (22) et dans lequel ledit filtre (18, 58) est réversible ou apte à entrer en rotation vers au moins deux positions différentes de telle manière que dans une position le filtre collecte des cendres et d'autres particules, et dans l'autre position des cendres et d'autres particules collectées sont enlevées du filtre au moyen dudit flux de gaz.

4. Appareil selon la revendication 3, dans lequel ledit filtre (18, 58) comprend deux côtés opposés, et le filtre est réversible.

5. Appareil selon la revendication 3 ou 4, dans lequel l'appareil comprend un équipement de mesure ou d'analyse (69) placé au niveau dudit filtre et configuré pour analyser des cendres accumulées dans ledit filtre (58).

6. Appareil selon l'une quelconque des revendications 3 à 5, dans lequel l'appareil comprend un capteur (60) permettant de mesurer ou de déterminer la différence de pression effective à travers ledit filtre.

7. Appareil selon l'une quelconque des revendications 1 à 6, dans lequel le récipient de dissolution (42) comprend au moins :
- un premier compartiment (44), dans lequel les cendres et les autres particules sont convoyées pour un mélange dans un liquide ;
- un second compartiment (46), dans lequel le liquide est apte à être convoyé à partir du premier compartiment, pour un échantillonnage ; et
- un filtre (70), à travers lequel le liquide est apte à être convoyé du premier compartiment (44) au second compartiment (46).

8. Appareil selon l'une quelconque des revendications 1 à 7, dans lequel le récipient de dissolution (42) comprend :
- un premier raccordement (48) permettant de convoyer du liquide vers le récipient de dissolution ; et
- un second raccordement (50) permettant de prélever un échantillon du liquide.

9. Appareil selon l'une quelconque des revendications 1 à 8, dans lequel le récipient de dissolution (42) comprend en outre un orifice de sortie (52), à travers lequel le liquide et les cendres et les autres particules dissoutes dans celui-ci peuvent être retirées du récipient de dissolution (42).

10. Appareil selon la revendication 9, dans lequel l'appareil (10) est configuré en lien avec la conduite de gaz de combustion (16) de telle manière que l'orifice de sortie (52) est en lien avec ladite conduite de gaz de combustion (16).

11. Appareil selon l'une quelconque des revendications 1 à 10, dans lequel l'appareil (10) est configuré en lien avec la conduite de gaz de combustion (16) de telle manière que la sonde (12) est à l'intérieur de la conduite de gaz de combustion (16) permettant de collecter du gaz de combustion, dans lequel l'appareil (10) comprend en outre un troisième canal (26) configuré pour convoyer un gaz de combustion hors du dispositif d'aspiration (20) et le ramener à la conduite de gaz de combustion (16).

12. Appareil selon l'une quelconque des revendications 1 à 11, dans lequel l'appareil (10) comprend au moins des éléments de fermeture (36, 62) configurés à la fois pour fermer le raccordement entre la sonde et le filtre et pour permettre au flux d'air soufflé à travers le filtre (18, 58) d'entrer dans le récipient de dissolution (42).

13. Procédé permettant de collecter des cendres provenant de gaz de combustion, le procédé comprenant au moins :
- la collecte d'un gaz de combustion qui contient des cendres et d'autres particules au moyen d'une sonde (12) ;
- la séparation de cendres et d'autres particules du gaz de combustion à l'aide d'un filtre (18, 58) configuré pour filtrer le gaz de combustion circulant à travers le filtre ;
- le convoyage d'un gaz de combustion de la sonde (12) au filtre (18, 58) ;
- l'aspiration d'un gaz de combustion à travers ledit filtre (18, 58) au moyen d'un dispositif d'aspiration (20) ; et
- le convoyage d'un gaz de combustion du filtre au dispositif d'aspiration ; et
- le convoyage d'un gaz comprimé vers le filtre (18, 58), en soufflant à travers le filtre (18, 58) ;
**caractérisé en ce que** le procédé comprend en outre :
- le convoyage des cendres et des autres particules enlevées en soufflant ledit gaz du filtre (18, 58) vers un récipient de dissolution (42) dans lequel les cendres et les autres particules amenées par le flux de gaz de combustion au filtre sont mélangées dans un liquide pour un échantillonnage, et
- le chauffage du gaz de combustion.

14. Procédé selon la revendication 13, dans lequel le procédé comprend en outre :
- l'inversion ou la rotation dudit filtre (18, 58) vers au moins deux positions différentes de sorte que dans une position le filtre collecte des cendres et d'autres particules et dans l'autre position des cendres et d'autres particules collectées sont enlevées du filtre à l'aide dudit flux de gaz.
